# EUROPEAN PATENT APPLICATION

(11) **EP 4 722 695 A1**
(43) Date of publication of application: **08.04.2026**
(21) Application number: 24819485.4
(22) Date of filing: 29.04.2024
(51) Int. Cl.: G01N 21/552, G01N 21/64, G01N 21/65, G01N 21/25, B82Y 15/00, B82Y 40/00

(54) **PLASMONIC WELL PLATE SUBSTRATE FOR SPECTROSCOPIC ANALYSIS, AND MANUFACTURING METHOD THEREFOR**

(30) Priority: 05.06.2023 KR 20230072417
(71) Applicant: KOREA INSTITUTE OF MATERIALS SCIENCE, Changwon-si, Gyeongsangnam-do 51508 (KR)
(72) Inventor: JUNG, Ho-sang, Changwon-si Gyeongsangnam-do 51480 (KR); KIM, Dong-ho, Changwon-si Gyeongsangnam-do 51382 (KR); PARK, Sung-gyu, Changwon-si Gyeongsangnam-do 51531 (KR); LEE, Min-young, Changwon-si, Gyeongsangnam-do 51460 (KR)
(74) Representative: Kador & Partner Part mbB
(86) International application number: PCT/KR2024/005808
(87) International publication number: WO 2024/253333

(57) **Abstract**

The present disclosure relates to a plasmonic wellplate substrate for spectroscopic analysis, and a manufacturing method therefor. More specifically, the present disclosure relates to a plasmonic wellplate substrate with improved signal enhancement effects and signal uniformity suitable for detection of a solution specimen and a manufacturing method of a plasmonic wellplate substrate for spectroscopic analysis that may improve signal enhancement effects and signal uniformity by easily controlling various shapes of polycrystalline structures.

## Description

### BACKGROUND

### 1. Field

The present disclosure relates to a plasmonic wellplate substrate for spectroscopic analysis, and a manufacturing method therefor. Specifically, the present disclosure relates to a plasmonic wellplate substrate for spectroscopic analysis with improved signal enhancement effects and signal uniformity, which are suitable for detection from an aqueous specimen, and a manufacturing method of the plasmonic wellplate substrate for spectroscopic analysis capable of improving signal enhancement effects and signal uniformity by easily controlling shapes of various polycrystalline structures.

### 2. Description of Related Art

Raman scattering refers to an inelastic scattering through which energy of incident light changes and a phenomenon that, when incident light is applied on a specific molecule, light with wavelength slightly different from that of the incident light is produced by intrinsic property of vibrational transition of the molecule.

In fact, almost all organic molecules have their intrinsic Raman shift so that signals may be collected even from a nonpolar molecule with induced polarization change through Raman spectroscopy using Raman scattering. In addition, Raman spectroscopy is not interfered by water molecules, and therefore, it is more suitable for detections of biomolecules, such as proteins and genes. A wavelength of a Raman emitted spectrum indicates characteristics of a chemical composition and structure of a light absorbing molecule within a sample. Therefore, a subject material of an analysis may be directly analyzed through analysis of such Raman signals.

In order to detect biomolecules by using such Raman spectroscopy, it is common to use a specimen in a dry form. Therefore, a separate step is required for drying a specimen. Accordingly, additional time and costs are required for drying a specimen, which may cause problems of contamination or denaturation of the specimen while the specimen is being dried.

Meanwhile, a wellplate is an experimental/test instrument consisted of a plate formed with an arrangement of a plurality of wells or grooves. A wellplate is actively used in biochemical analyses and clinical tests. When a target material or a disease is detected or diagnosed with a wellplate, it is common to detect the target material or diagnose the disease after inducing a reaction by applying a specimen for analysis into the inside of a well while the well is provided with a material for the detection of the target material or the diagnosis of the disease on the well's inner surface. By using such wellplates, it is easy to simultaneously detect target materials from a plurality of specimens. In addition, because a wellplate is suitable for analysis of a liquid specimen, liquid specimens of body fluids, such as urine, saliva, tear, or sweat, may be used as they are. Accordingly, it may be efficient in the aspect of the costs and time for detection of a target material or diagnosis of disease.

As background of the present disclosure, a method and a device for diagnosing viral infection using teardrop are described in Korean Patent Publication No.10-2016-0014866. In the patent publication, a separate step of drying collected teardrops in order to prepare a specimen for measurement is included for obtaining Raman spectra.

### SUMMARY

An object of the present disclosure is to provide a plasmonic wellplate substrate for spectroscopic analysis with superior signal enhancement effects and signal uniformity, which are suitable for analysis of a liquid specimen, when in use for spectroscopic analysis.

Another object of the present disclosure is to provide a plasmonic wellplate substrate for spectroscopic analysis capable of qualitative and quantitative analysis of a material to be analyzed without labeling.

Another object of the present disclosure is to provide a plasmonic wellplate substrate for spectroscopic analysis suitable for simultaneous analysis of a plurality of specimens.

Another object of the present disclosure is to provide a manufacturing method of a plasmonic wellplate substrate for spectroscopic analysis having improvement of signal enhancement effects and signal uniformity due to easy control and formation of a nanostructure shape of a polycrystalline structure formed on a wellplate member.

Another object of the present disclosure is to provide an effective manufacturing method of a plasmonic wellplate substrate for spectroscopic analysis with superior signal enhancement effects and signal uniformity suitable for analysis of an aqueous specimen.

Objects of the present disclosure are not limited to the purposes stated above. Other unstated purposes should be clearly understood from the Detailed Description.

According to one aspect, it is provided a wellplate substrate for spectroscopic analysis including: a wellplate member having at least one well; and a polycrystalline structure formed inside the well, wherein the polycrystalline structure is consisted of a cluster formed of a plurality of gold nanostructures and includes multiple pores inside.

According to one embodiment, the gold nanostructures or the cluster formed of gold nanostructures may be connected to one another.

According to one embodiment, the polycrystalline structure may have at least one shape of a nano-sponge shape, a nano-tree shape, a nano-branch shape and a nano-coral shape.

According to one embodiment, the polycrystalline structure may further include a gold nanoparticle layer on its surface.

According to one embodiment, the polycrystalline structure may further include a gold nanolayer additionally grown with a gold precursor on the gold nanoparticle layer.

According to one embodiment, the polycrystalline structure may further include a gold nanolayer additionally grown with a gold precursor on its surface.

According to one embodiment, the polycrystalline structure may further include a gold nanoparticle layer on the gold nanolayer.

According to one embodiment, an average thickness of a gold nanoparticle layer or gold nanolayer may be 5 to 100 nm.

According to one embodiment, the plasmonic wellplate substrate for spectroscopic analysis may be for Surface Enhanced Raman Spectroscopy (SERS), Plasmon-Enhanced Fluorescence (PEF), or Fluorescence analysis.

According to another aspect, it is provided a manufacturing method of a plasmonic wellplate substrate for spectroscopic analysis, including: i) preparing a wellplate member having at least one well; and ii) forming a polycrystalline structure inside the well by soaking the wellplate member in a composition for manufacturing a substrate for spectroscopic analysis, the composition including a solution of a gold precursor and a reducing agent, wherein the polycrystalline structure formed in the step ii) is consisted of a cluster formed of a plurality of gold nanostructures and includes a plurality of pores inside, and wherein a ratio between the gold precursor and the reducing agent in the step ii) is from 1:1 to 1:10 to control a shape of the polycrystalline structure.

According to one embodiment, forming a gold nanoparticle layer on the surface of the polycrystalline structure by attaching gold nanoparticles on the wellplate member with the formed polycrystalline structure may be further included after the step ii).

According to one embodiment, forming an additionally grown gold nanolayer on the gold nanoparticle layer by soaking the wellplate member in a composition for manufacturing a substrate for spectroscopic analysis, the composition including a solution of a gold precursor and a reducing agent, may be further included after the step of forming a gold nanoparticle layer on the surface of the polycrystalline.

According to one embodiment, after the step ii), forming an additionally grown gold nanolayer on the surface of the polycrystalline structure by soaking the wellplate member with the formed polycrystalline structure in a composition for manufacturing a substrate for spectroscopic analysis, the composition including a solution of a gold precursor and a reducing agent, may be further included.

According to one embodiment, forming a gold nanoparticle layer on the surface of the polycrystalline structure by attaching gold nanoparticles on the wellplate member may be further included after the step of forming an additionally grown gold nanolayer on the surface of the polycrystalline structure.

According to one embodiment, before forming the gold nanoparticle layer, modifying surface of the polycrystalline structure may be further included.

According to one embodiment, the reducing agent may be at least one species of ascorbic acid, hydroxylamine, hydroxylamine-O-sulfonic acid, and O-methylhydroxylamine hydrochloride.

According to one embodiment, the plasmonic wellplate substrate for spectroscopic analysis of the present disclosure may include a polycrystalline structure in various shapes of a cluster of gold nanostructures on a wellplate member so that, when the plasmonic wellplate substrate is used for spectroscopic analysis, it has superior signal enhancement effects and signal uniformity and is suitable for analysis of an aqueous specimen.

According to one embodiment, use of the plasmonic wellplate substrate for spectroscopic analysis of the present disclosure does not require drying a specimen when an aqueous specimen is analyzed.

According to one embodiment, use of the plasmonic wellplate substrate for spectroscopic analysis of the present disclosure allows qualitative and quantitative analysis of a label-free target material.

According to one embodiment, use of the plasmonic wellplate substrate for spectroscopic analysis of the present disclosure is efficient for simultaneously analyzing a plurality of specimens for analysis at a high sensitivity.

According to one embodiment, a manufacturing method of the plasmonic wellplate substrate for spectroscopic analysis of the present disclosure allows efficient manufacturing of the plasmonic wellplate substrate for spectroscopic analysis with improved signal enhancement effects and signal uniformity by easily controlling and forming a polycrystalline structure formed of a cluster of a gold nanostructure on a wellplate member into various shapes.

According to one embodiment, a manufacturing method of the plasmonic wellplate substrate for spectroscopic analysis of the present disclosure allows efficient manufacturing of the plasmonic wellplate substrate for spectroscopic analysis with improved signal enhancement effects and signal uniformity, which are suitable for analysis of a liquid specimen.

### BRIEF DESCRIPTION OF THE DRAWINGS

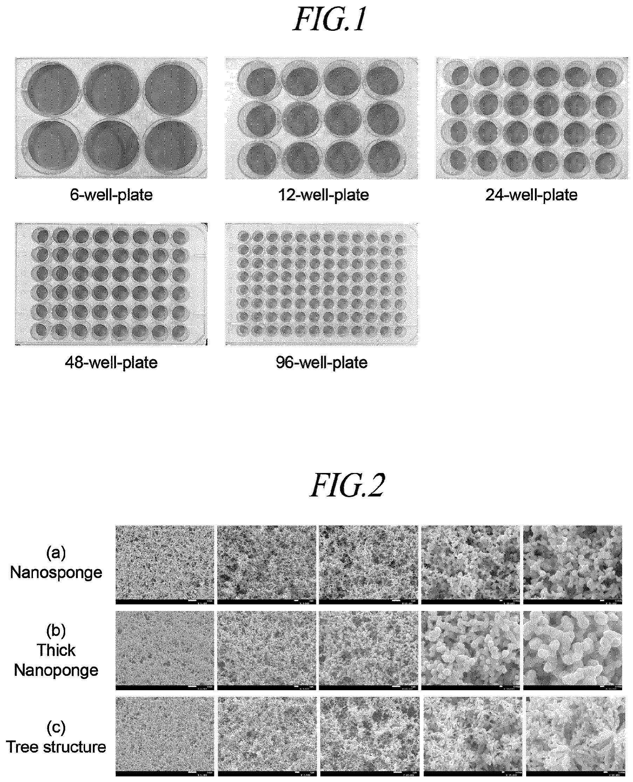

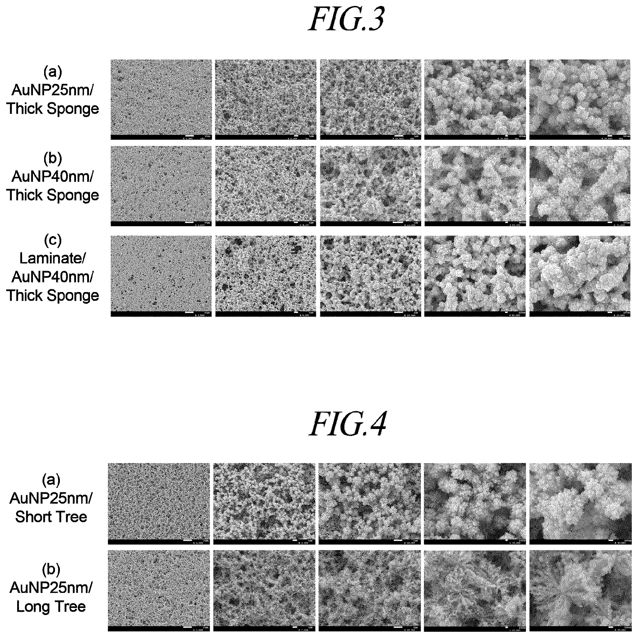

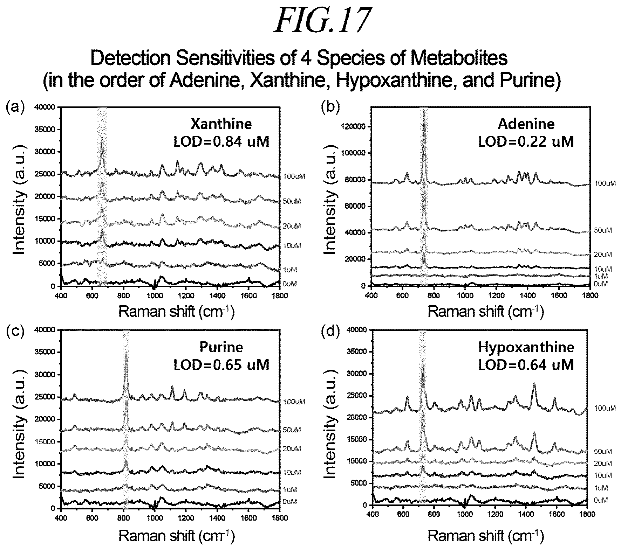

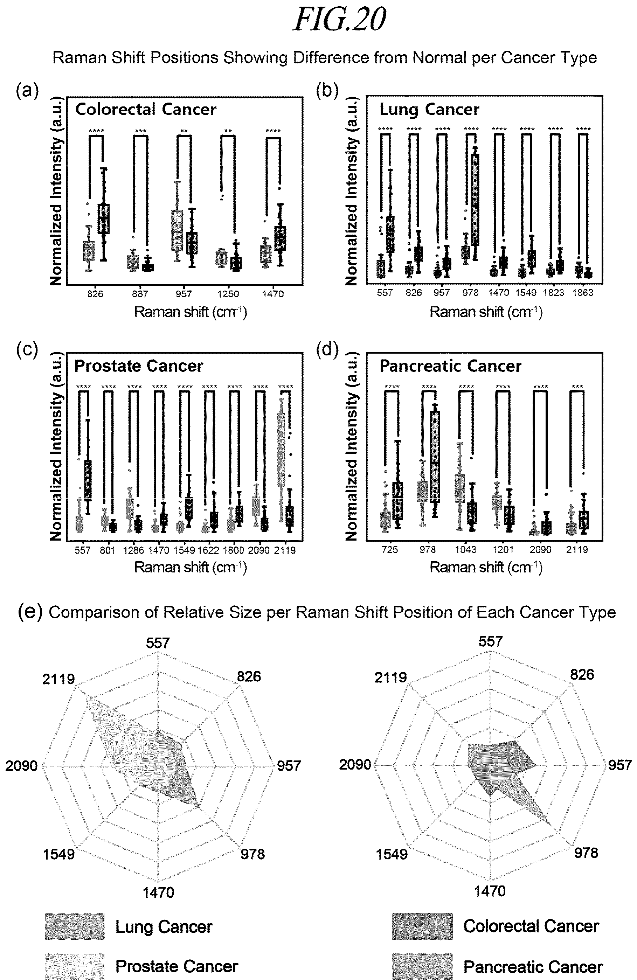

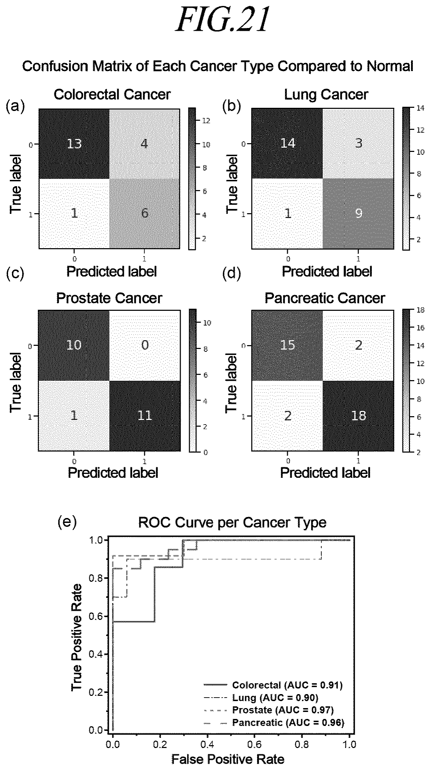

FIG. 1 is a photograph of types of plasmonic wellplate substrates for spectroscopic analysis per well size manufactured according to one embodiment of the present disclosure.
(a) to (c) in FIG. 2 are SEM photographs illustrating various shapes of polycrystalline structures formed on a wellplate member according to one embodiment of the present disclosure.
(a) and (b) in FIG. 3 are SEM photographs illustrating polycrystalline structures in a thick sponge shape including a gold nanoparticle layer, which is formed on a wellplate member according to one embodiment of the present disclosure and formed by attaching gold nanoparticles on its surface to the thickness of 25 nm and 40 nm, respectively.
(c) in FIG. 3 are SEM photographs illustrating polycrystalline structures in a thick sponge shape including a gold nanolayer, which is formed on a wellplate member according to one embodiment of the present disclosure and formed by additional growth of a gold nanolayer on the surface of a gold nanoparticle layer by a gold precursor.
(a) and (b) in FIG. 4 are SEM photographs illustrating polycrystalline structures in a short tree shape or a long tree shape including a gold nanoparticle layer, which is formed on a wellplate member according to one embodiment of the present disclosure and formed by attaching gold nanoparticles on its surface to the thickness of 25nm.
FIG. 5 is a graph illustrating XRD results of polycrystalline structures of the plasmonic wellplate substrate for spectroscopic analysis manufactured according to one embodiment of the present disclosure.
FIG. 6 is a diagram schematically illustrating various manufacturing methods of the plasmonic wellplate for spectroscopic analysis according to one embodiment of the present disclosure.
(a) in FIG. 7 is a graph illustrating SERS signal intensity per nanostructure of a polycrystalline structure of the plasmonic wellplate substrate for spectroscopic analysis manufactured according to one embodiment of the present disclosure.

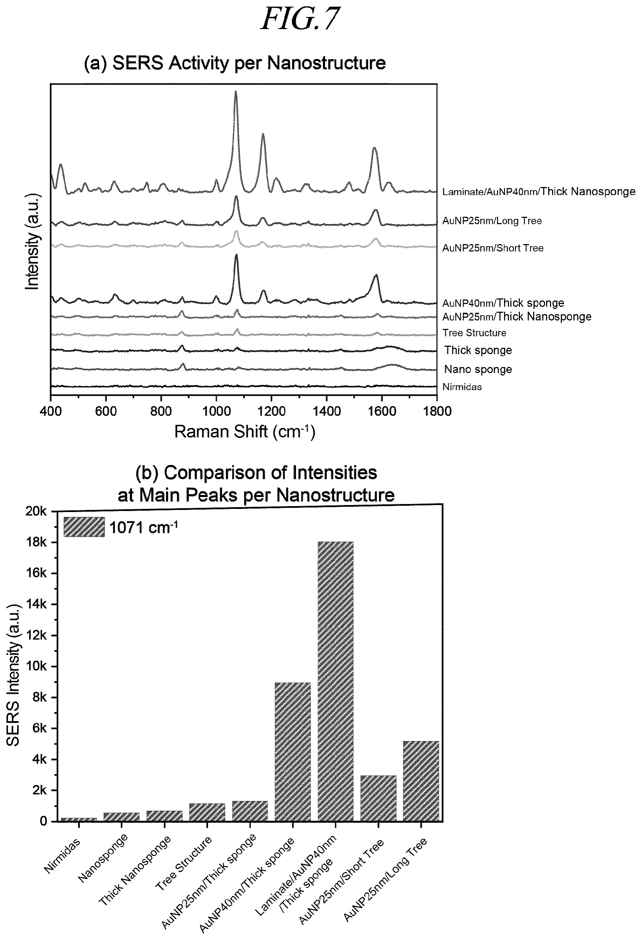

(b) in FIG. 7 is a graph illustrating SERS signal intensity at a main peak per nanostructure of a polycrystalline structure of the plasmonic wellplate substrate for spectroscopic analysis manufactured according to one embodiment of the present disclosure.

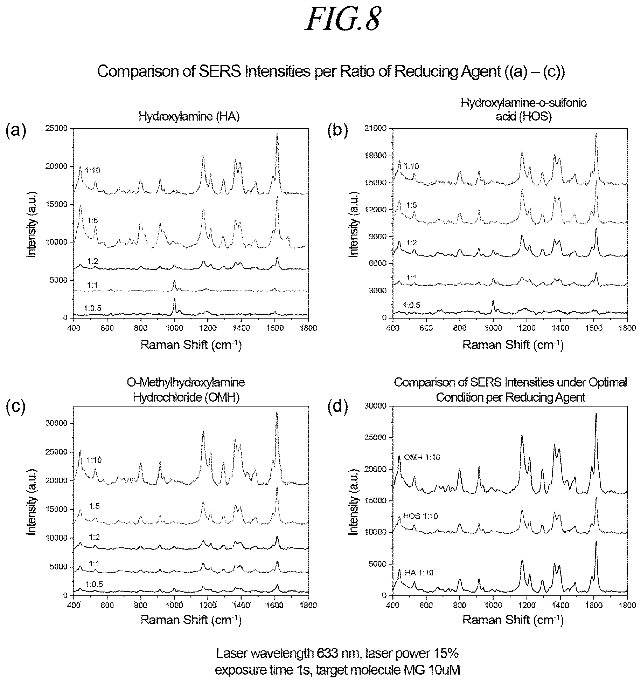

FIG. 8 are graphs illustrating SERS signal intensities measured at 633 nm per reducing agent type and ratio between a gold precursor and a reducing agent in forming a polycrystalline structure of the plasmonic wellplate substrate for spectroscopic analysis manufactured according to one embodiment of the present disclosure.

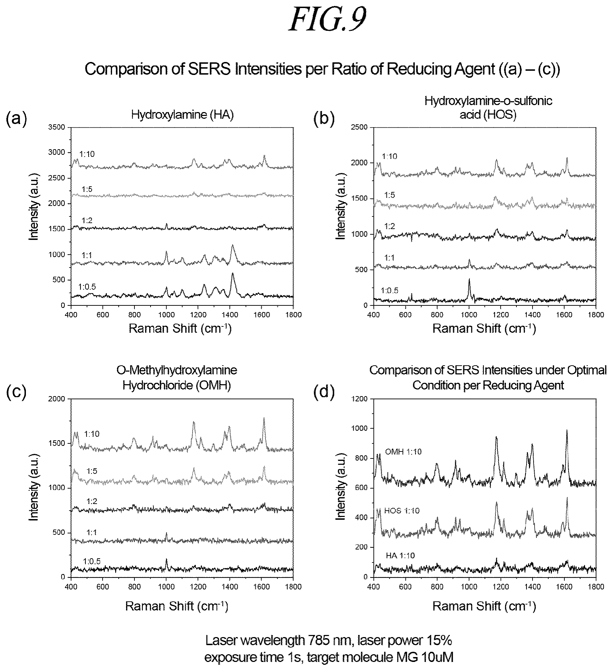

FIG. 9 are graphs illustrating SERS signal intensities measured at 785 nm per reducing agent type and ratio between a gold precursor and a reducing agent in forming a polycrystalline structure of the plasmonic wellplate substrate for spectroscopic analysis manufactured according to one embodiment of the present disclosure.

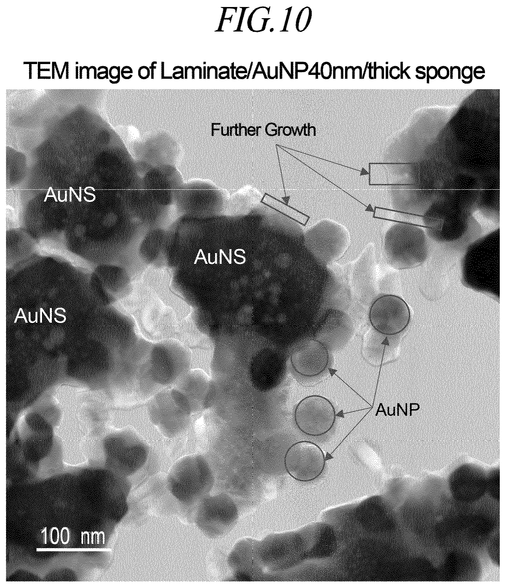

FIG. 10 is a TEM image of a nanostructure of a polycrystalline structure with formation of an additionally grown gold nanolayer by a gold precursor after formation of a gold nanoparticle layer by attaching gold nanoparticles on a polycrystalline structure, in a thick sponge shape, of the plasmonic wellplate substrate for spectroscopic analysis manufactured according to one embodiment of the present disclosure.

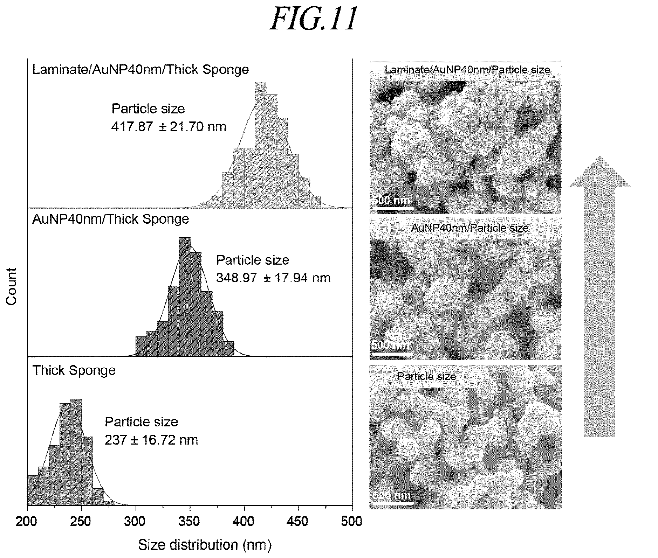

FIG. 11 are graphs and images illustrating size distributions of nanostructures of a polycrystalline structure, in a thick sponge shape, of the plasmonic wellplate substrate for spectroscopic analysis manufactured according to one embodiment of the present disclosure, nanostructures of a polycrystalline structure with formation of a gold nanoparticle layer by attaching gold nanoparticles on the polycrystalline structure in a thick sponge shape, and nanostructures of a polycrystalline structure with formation of an additionally grown gold nanolayer on the gold nanoparticle layer by gold precursor.

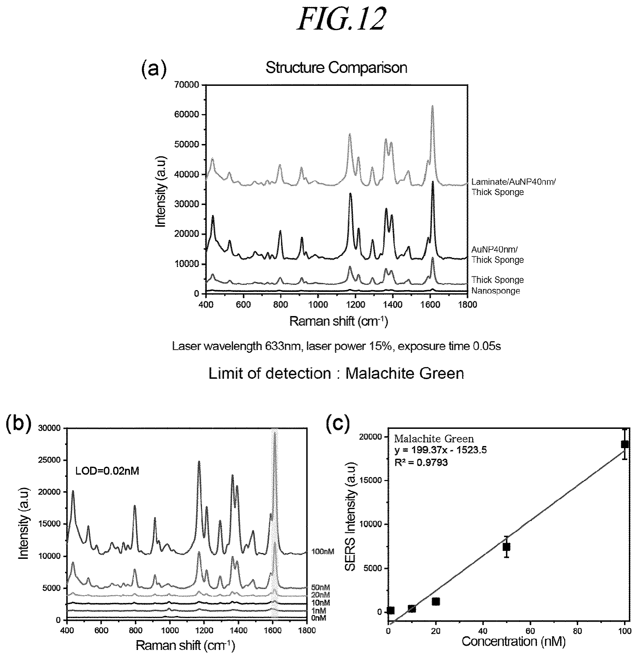

(a) in FIG. 12 is a graph illustrating a SERS signal intensity per nanostructure of a polycrystalline structure and measured at 633 nm for a dry specimen using the plasmonic wellplate substrate for spectroscopic analysis manufactured according to one embodiment of the present disclosure.
(b) and (c) in FIG. 12 are graphs illustrating a SERS signal intensity and limit of detection per concentration of a specimen and measured at 633 nm for a dry specimen using the plasmonic wellplate substrate for spectroscopic analysis manufactured according to one embodiment of the present disclosure.

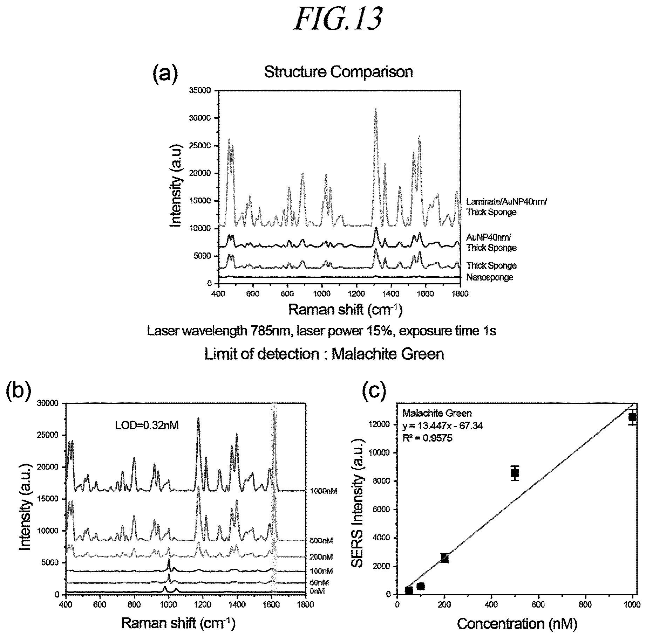

(a) in FIG. 13 is a graph illustrating a SERS signal intensity per nanostructure of a polycrystalline structure and measured at 785 nm for a dry specimen using a plasmonic wellplate substrate for spectroscopic analysis manufactured according to one embodiment of the present disclosure.
(b) and (c) in FIG. 13 are graphs illustrating a SERS signal intensity and limit of detection per concentration of a specimen and measured at 785 nm for a dry specimen using the plasmonic wellplate substrate for spectroscopic analysis manufactured according to one embodiment of the present disclosure.

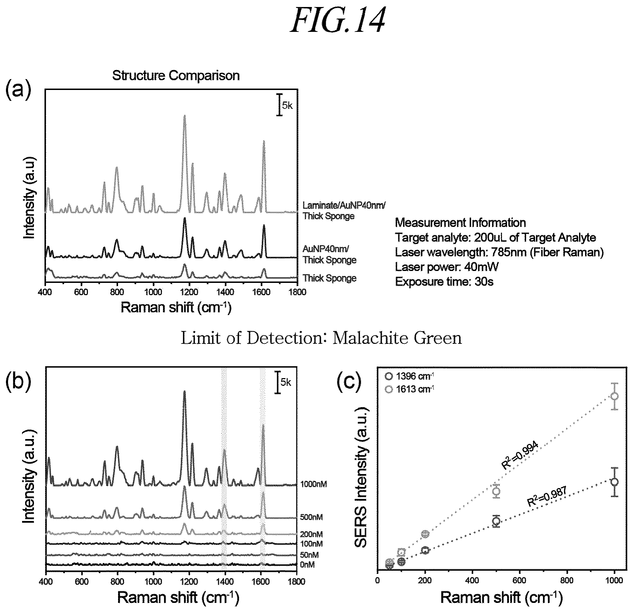

(a) in FIG. 14 is a graph illustrating a SERS signal intensity per nanostructure of a polycrystalline structure and measured at 785 nm for a liquid specimen using the plasmonic wellplate substrate for spectroscopic analysis manufactured according to one embodiment of the present disclosure.
(b) and (c) in FIG. 14 are graphs illustrating a SERS signal intensity and limit of detection per concentration of a specimen and measured at 785 nm for a liquid specimen using the plasmonic wellplate substrate for spectroscopic analysis manufactured according to one embodiment of the present disclosure.

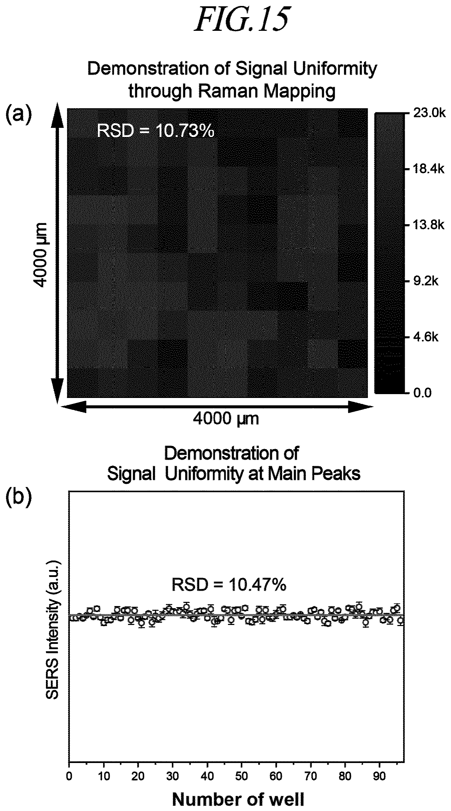

(a) in FIG. 15 is a graph illustrating SERS signal uniformity of a liquid specimen in one well of the plasmonic wellplate substrate for spectroscopic analysis manufactured according to one embodiment of the present disclosure.
(b) in FIG. 15 is a graph illustrating SERS signal homogeneities of liquid specimens in 96 different wells of the plasmonic wellplate substrate for spectroscopic analysis manufactured according to one embodiment of the present disclosure.

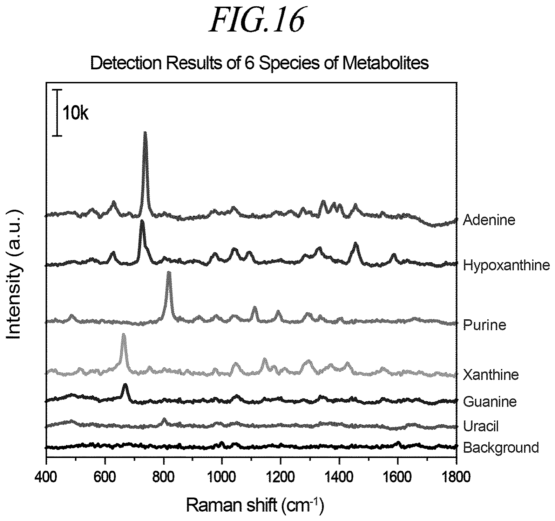

FIG. 16 is a graph illustrating SERS signal intensities of 6 types of metabolites (Uracil, Guanine, Xanthine, Purine, Hypoxanthine and Adenine) measured for liquid specimens using the plasmonic wellplate substrate for spectroscopic analysis manufactured according to one embodiment of the present disclosure.
(a) to (d) in FIG. 17 are graphs illustrating SERS signal intensities and limits of detection of 4 types of metabolites (Adenine, Xanthine, Hypoxanthine and Purine) measured for liquid specimens by using the plasmonic wellplate substrate for spectroscopic analysis manufactured according to one embodiment of the present disclosure.

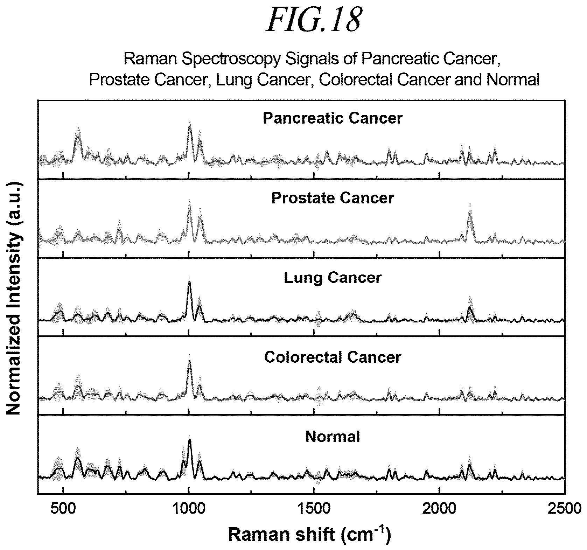

FIG. 18 is a graph illustrating normalized intensities of SERS signals of urine specimens of cancer patients measured by using the plasmonic wellplate substrate for spectroscopic analysis manufactured according to one embodiment of the present disclosure.

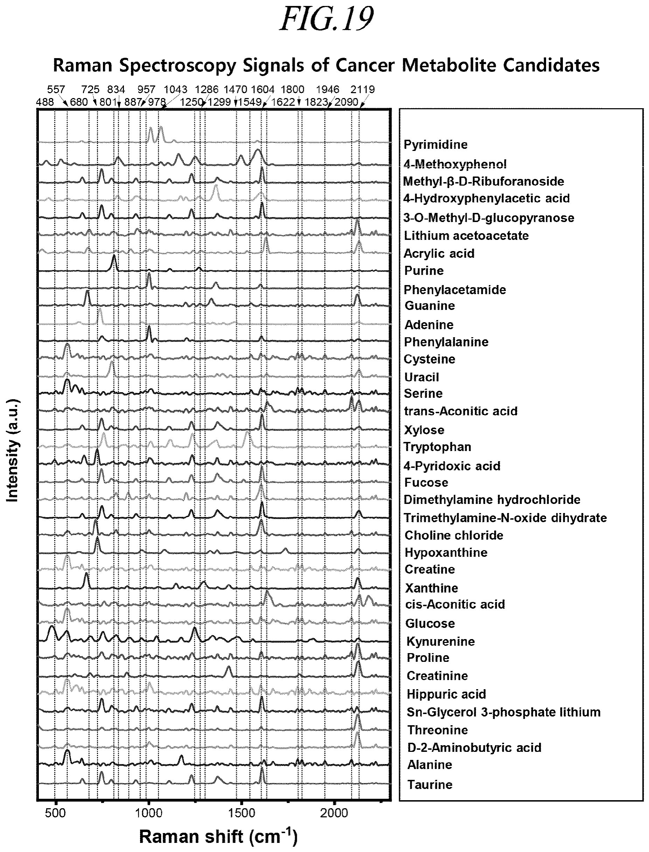

FIG. 19 is a graph illustrating SERS signal intensities of cancer metabolite candidates for urine specimens of cancer patients measured by using the plasmonic wellplate substrate for spectroscopic analysis manufactured according to one embodiment of the present disclosure.
(a) to (d) in FIG. 20 are graphs illustrating positions of Raman Shifts where difference from a normal person is shown in a reliability range of 95 % or more per cancer type, the Raman Shifts measured by using the plasmonic wellplate substrate for spectroscopic analysis manufactured according to one embodiment of the present disclosure.
(e) in FIG. 20 is a graph illustrating relative size comparison per Raman Shift position of each cancer type, the Raman Shift measured by using the plasmonic wellplate substrate for spectroscopic analysis manufactured according to one embodiment of the present disclosure.
(a) to (d) in FIG. 21 are confusion matrix result graphs for illustrating accuracy of distinguishment from a normal person per cancer type for urine specimens of cancer patients measured by using the plasmonic wellplate substrate for spectroscopic analysis manufactured according to one embodiment of the present disclosure.
(e) in FIG. 21 is a Receiver Operating Characteristic (ROC) curve graph for illustrating accuracy of distinguishment from a normal person per cancer type for urine specimens of cancer patients measured by using the plasmonic wellplate substrate for spectroscopic analysis manufactured according to one embodiment of the present disclosure.

### DETAILED DESCRIPTION

Objects, specific advantages, and novel characteristics of the present disclosure will become clearer through the detailed description and embodiments hereinafter in relation to the attached figures.

First, terms or words used in this specification and claims should not be construed as their general dictionary meanings, but as a meaning and a concept that correspond to the technical idea of the present disclosure based on the principle that an inventor may appropriately define a concept of a term in order to explain his/her invention to the best method.

In the specification, when elements, such as a layer, a part, or a substrate, are described to be "on," "connected to," or "coupled to" another element, such descriptions may refer that the elements are directly "on," "connected to," or "coupled to" the another element, or that at least another element may be interposed between the two elements. In the contrary, when an element is described to be "directly on," "directly connected to," or "directly coupled to" another element, there is no other element interposed between the two elements.

Terms used in the specification are merely used for explanation of specific embodiments and are not intended to limit the present disclosure. Singular expressions include plural expressions unless the context clearly indicates otherwise.

Terms, such as "include" or "have," are merely for indicating presence of characteristics, numbers, steps, actions, elements, parts or combinations thereof described in the specification. The terms should be interpreted as not preliminarily excluding possibilities of presence or addition of at least one other characteristic, number, action, element, part or combination thereof.

In the specification, a description that a part "includes" an element refers that, unless there is a specific contrary description, the element may be further included, and other elements are not excluded. Also, in the entire specification, the description of being "on" an object refers to a state of being disposed above or below a part of the object and does not necessarily mean the state of being above based on the gravitational direction.

The present disclosure may be applied with various variations and have several embodiments. Accordingly, specific examples are illustrated in figures and explained in detail in the detailed descriptions. Nonetheless, these are not to limit the present disclosure to specific embodiments. Instead, these should be understood that the disclosure includes every variation, and equivalent to substituent included in the scope of ideas and technology of the present disclosure. In explanation of the present disclosure, when detailed descriptions about a related, known technology may obscure the gist of the present disclosure, the detailed descriptions thereof are omitted.

Hereinafter, embodiments of the present disclosure are explained in detail with reference to the attached figures. In explanation with reference to the attached figures, the same or corresponding components shall be assigned with the same reference figure numeral, and redundant descriptions thereof shall be omitted.

According to one aspect, the plasmonic wellplate substrate for spectroscopic analysis, including a wellplate member with at least one well; and a polycrystalline structure formed in the well, wherein the polycrystalline structure is consisted of a cluster formed with a plurality of gold nanostructures and includes a plurality of pores inside, is provided.

FIG. 1 is a photograph of types of plasmonic wellplate substrates for spectroscopic analysis per well size manufactured according to one embodiment of the present disclosure.

Referring to FIG. 1, the plasmonic wellplate member for spectroscopic analysis of the present disclosure may have a polycrystalline structure consisted of a cluster formed of gold nanostructure formed on a wellplate member having at least one well so that it may appear as if a gold film is formed inside the well.

Although not limited thereto, it may be a multi-wellplate with at least two wells of known 6-wellplate, 12-wellplate, 24-wellplate, 48-wellplate, 96-wellplate, and 384-wellplate of various well sizes.

A Petri Dish is used for label-free detection of bacteria. Although not limited thereto, by using the plasmonic wellplate substrate for spectroscopic analysis of the present disclosure, it may be used for in-situ mapping, species classification, drug-resistant bacteria detection, etc.

The 6-wellplate is used for metabolite profiling through cancer cell culture and label-free methods. However, although not limited thereto, the plasmonic wellplate substrate of the present disclosure allows in-situ Raman imaging, and monitoring of drug reactions and immune responses.

Although not limited thereto, by using the plasmonic wellplate substrate of the present disclosure such as 96-wellplate may be applicable to the fields of high-throughput chemical screening and ultra-high-sensitive ELISA platforms by PEF and SERS analysis.

(a) to (c) in FIG. 2 are SEM photographs illustrating various polycrystalline structures of nanostructures formed on a wellplate member according to one embodiment.

Referring to (a) to (c) of FIG. 2, a polycrystalline structure consisted of a cluster formed with a plurality of gold nanostructures formed on the wellplate member may be shown. The gold nanostructures are grown directly on a wellplate member through solution process using a gold precursor and a reducing agent to form clusters.

More specifically, an Au precursor among noble metals forms a cluster by forming a nanostructure. Especially, using a solution process leads to direct growth on a wellplate member. Specifically, clustered nanostructures form small-size polygonal structure grains by coalescence, and the grains gradually grow through oriented attachment growth. Accordingly, a polycrystalline structure having a plurality of grain boundaries is formed. Although not limited thereto, a polycrystalline structure may grow to the size of micrometers in average. A polycrystalline structure having a plurality of grain boundaries as above may dramatically improve signal intensity and signal uniformity when it is used as a substrate for spectroscopic analysis due to increased scattering at a plurality of grain boundaries.

In addition, the polycrystalline structure may be consisted of a cluster formed of a plurality of gold nanostructures and include a plurality of pores inside. Although not limited thereto, the plurality of gold nanostructures or the cluster formed of a plurality of gold nanostructures may be connected to one another and include pores inside. Although not limited thereto, the plurality of gold nanostructures or the cluster formed of a plurality of gold nanostructures may be connected to one another in a branch structure.

Although not limited thereto, an average particle size of the polycrystalline structure may be 0.1 to 100µm. A substrate for spectroscopic analysis of the present disclosure may grow into a polycrystalline structure with an average particle size of 0.1 to 100µm through a solution process while the plurality of gold nanostructures or the cluster formed of a plurality of gold nanostructures being connected in a branch structure. Although not limited thereto, the average particle size of the polycrystalline structure may be suitable for enhancement of signal intensity and signal uniformity in said range.

As above, the plurality of gold nanostructures are interconnected to consist a cluster, and the polycrystalline structure may be consisted of the cluster formed of the plurality of gold nanostructures.

As discussed above, since gold nanostructures are not detached from one another but connected in a shape of a cluster having distributed pores inside, the plasmonic wellplate substrate for spectroscopic analysis of the present disclosure may have significantly increased nanogaps and hotspots when compared to the shape of the gold nanostructures being detached from one another. Therefore, the plasmonic wellplate substrate for spectroscopic analysis of the present disclosure may show superior SERS signal enhancement and signal uniformity for a target material.

Although not limited thereto, the pores included in the polycrystalline structure may be formed in a manner that a porous structure among a plurality of gold nanostructures may be disorderly but uniform as a whole or that a porous structure among clusters formed of a plurality of gold nanostructures may be disorderly but uniform as a whole. Accordingly, the plasmonic wellplate substrate for spectroscopic analysis of the present disclosure may improve SERS signal enhancement effects and signal uniformity for a target material.

Referring to (a) to (c) in FIG. 2, although not limited thereto, the polycrystalline structure may be in a shape, such as nano-sponge, thick sponge, nano-tree, nano-branch, and nano-coral. The nano-sponge is a sponge shape including a plurality of pores inside. A shape of a thick-sponge may be the same as or similar to that of a nano-sponge. However, a thick-sponge may mean a sponge shape with a cluster formed thick. The nano-tree, nano-branch, and nano-coral may mean formation in a tree shape, a branch shape, or a coral shape with a cluster growing long.

Although not limited thereto, by controlling an optimal ratio of a reducing agent to a gold precursor depending on the types of reducing agents, a shape of a polycrystalline structure formed on a substrate for spectroscopic analysis may be easily controlled. In addition, by controlling time for soaking the wellplate member in a composition for manufacturing a substrate for spectroscopic analysis, a shape of a polycrystalline structure formed on a substrate for spectroscopic analysis may be easily controlled.

(a) and (b) in FIG. 3 are SEM photographs illustrating polycrystalline structures in a thick sponge shape including a gold nanoparticle layer, which is formed on a wellplate member according to one embodiment of the present disclosure and formed by attaching gold nanoparticles on its surface to the thickness of 25 nm and 40 nm, respectively.

(a) and (b) in FIG. 4 are SEM photographs illustrating polycrystalline structures in a short tree shape or a long tree shape including a gold nanoparticle layer, which is formed on a wellplate member according to one embodiment of the present disclosure and formed by attaching gold nanoparticles on its surface to the thickness of 25nm.

Referring to (a) and (b) of FIG. 3 and (a) and (b) of FIG. 4, the polycrystalline structure of the present disclosure may further include a gold nanoparticle layer on its surface. The gold nanoparticle layer may be formed by attaching gold nanoparticle, which may be pre-manufactured, prepared, and added, on the polycrystalline structure surface.

(c) in FIG. 3 are SEM photographs illustrating polycrystalline structures in a thick sponge shape comprising a gold nanoparticle layer, which is formed on a wellplate member according to one embodiment of the present disclosure and includes a gold nanolayer formed by additional growth with gold precursor on the gold nanoparticle layer.

Referring to (c) of FIG. 3, a polycrystalline structure of the present disclosure may further include a gold nanolayer formed by additional growth with a gold precursor on the gold nanoparticle layer. The gold nanolayer may be formed by additional growth on the gold nanoparticle layer by a composition, which may be the same as or different from the composition including a solution of a gold precursor and a reducing agent initially used for formation of a polycrystalline structure.

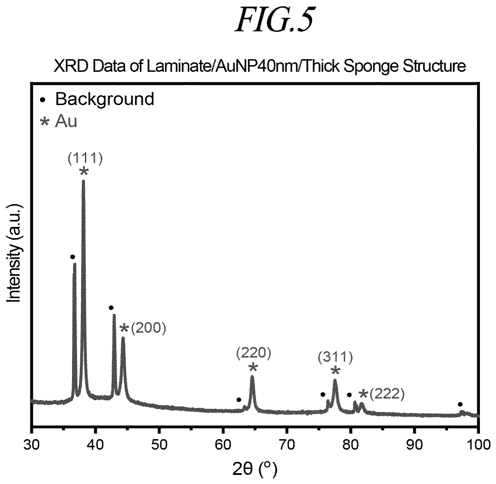

FIG. 5 is a graph illustrating XRD results of polycrystalline structures of the plasmonic wellplate substrate for spectroscopic analysis manufactured according to one embodiment of the present disclosure. Specifically, FIG. 5 illustrates XRD results about a polycrystalline structure formed by additional growth of a gold nanolayer on a gold nanoparticle layer. Therefore, polycrystalline properties of a polycrystalline structure of the plasmonic wellplate substrate for spectroscopic analysis manufactured according to one embodiment of the present disclosure can be verified.

Although not limited thereto, the polycrystalline structure of the present disclosure may further include a gold nanolayer additionally grown with a gold precursor on its surface. The gold nanolayer may be formed by additional growth with a composition, which may be the same as or different from the composition including a solution of a gold precursor and a reducing agent initially used for formation of a polycrystalline structure.

Although not limited thereto, a polycrystalline structure of the present disclosure may further include a gold nanoparticle layer on the gold nanolayer. The gold nanoparticle layer may be formed by attaching gold nanoparticles on the gold nanolayer with the manufactured and prepared gold nanoparticles.

Although not limited thereto, the gold nanoparticle layer may be in a consecutive layer shape or a discontinuous shape. Although not limited thereto, the gold nanolayer may be in a consecutive layer form or a partially discontinuous shape. However, a consecutive layer shape may be suitable. The gold nanolayer may be in a shape of covering or laminating polycrystalline structure.

Although not limited thereto, an average thickness of a gold nanolayer or a gold nanoparticle layer may be 5 to 100nm, which may be suitable for improvement of signal enhancement effects and signal uniformity by additional growth, 10 to 95nm, 15 to 90 nm, 20 to 85 nm, 20 to 80 nm, 20 to 75 nm, 20 to 70 nm, 20 to 65 nm, 20 to 60 nm, 20 to 55 nm, 20 to 50 nm, 20 to 45 nm, or 25 to 40 nm.

The plasmonic wellplate substrate for spectroscopic analysis of the present disclosure may be for analysis by Surface Enhanced Raman Spectroscopy (SERS), Plasmon-Enhanced Fluorescence (PEF), or Fluorescence. Although not limited thereto, the plasmonic wellplate substrate for spectroscopic analysis of the present disclosure may be more suitable for analysis by Surface Enhanced Raman Spectroscopy (SERS). In the case of the analysis by Surface Enhanced Raman Spectroscopy, without labelling, a target material may be efficiently detected and analyzed at a high sensitivity, for example, with fluorescent substances.

The plasmonic wellplate substrate for spectroscopic analysis of the present disclosure may allow efficient detection and analysis of a target material without a separate labelling that is by label-free, of a specimen or target material to be analyzed.

Although not limited thereto, the target material may be selected from one species of a cell, a metabolite, a protein, nucleic acid, DNA, RNA, mRNA, a lipid, a hormone, a small metabolite, an enzyme, an organic molecule, a virus, a bacterium, an antigen, an antibody, a neurotransmitter, an extracellular vesicle, a microvesicle, an exosome and fat.

Although not limited thereto, the specimen may be suitably a liquid specimen. The specimen may be a solution including said various target materials. The specimen may be various body fluids, such as urine, saliva, blood, sweat, tears, ascites, gastric juice, and cerebrospinal fluid, substrates, or secretions.

A conventional substrate for spectroscopic analysis has low sensitivity for measurements of a liquid specimen due to low hygroscopicity. However, since the plasmonic wellplate substrate for spectroscopic analysis of the present disclosure allows containing of a liquid specimen, it allows prompt analysis and detection of a liquid specimen as well on-site.

Although not limited thereto, the plasmonic wellplate substrate for spectroscopic analysis of the present disclosure allows diagnosis of cancer with a liquid specimen. Although not limited thereto, metabolite analysis of said specimen and target material may provide necessary information for diagnosis of cancer and allow early diagnosis of cancer through non-invasive tests. It also allows multiple analyses at an extremely high level of sensitivity.

Although not limited thereto, the cancer may be selected from at least one species of pancreatic cancer, prostate cancer, lung cancer, colorectal cancer, bronchial cancer, malignant colorectal neoplasm breast cancer, stomach cancer, ovarian cancer, bladder cancer, brain cancer, thyroid cancer, esophageal cancer, uterine cancer, liver cancer, kidney cancer, and cholangiocarcinoma.

FIG. 18 is a graph illustrating normalized intensities of SERS signals of urine specimens of cancer patients measured by using the plasmonic wellplate substrate for spectroscopic analysis manufactured according to one embodiment of the present disclosure. FIG. 19 is a graph illustrating SERS signal intensities of cancer metabolite candidates from urine specimens of cancer patients by measuring with the plasmonic wellplate substrate for spectroscopic analysis manufactured according to one embodiment of the present disclosure.

Referring to FIGS. 18 and 19, it can be confirmed that the plasmonic wellplate substrate of the present disclosure is suitable to be used for diagnosis of cancer by using liquid specimens, such as urine, of a patient who may have cancer metabolites.

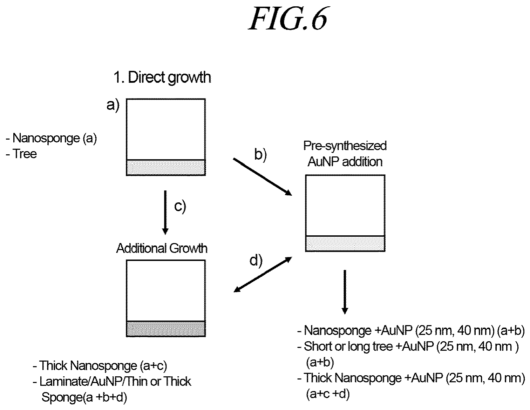

FIG. 6 is a diagram schematically illustrating various manufacturing methods of the plasmonic wellplate substrate for spectroscopic analysis according to one embodiment of the present disclosure.

By referring to FIG. 6 and according to another aspect of the present disclosure, a manufacturing method of a plasmonic wellplate substrate for spectroscopic analysis including: i) preparing a wellplate member having at least one well; and ii) forming a polycrystalline structure inside the well by soaking a wellplate member in a composition for manufacturing a substrate for spectroscopic analysis, the composition including a solution of a gold precursor and a reducing agent, wherein the polycrystalline formed in the step ii) is consisted of a cluster formed of a plurality of gold nano structures and has a plurality of pores inside, and wherein a ratio between the gold precursor and the reducing agent in step ii) is 1:1 to 1:10 to control a shape of the polycrystalline structure is provided.

The step i) is the step of preparing a wellplate member having at least one well. The wellplate member with at least one well may be one of the known various multi-wellplates, such as a 6-wellplate, 12-wellplate, 24-wellplate, 96-wellplate, or 384-wellplate.

The step ii) is the step of forming a polycrystalline structure inside the well by soaking a wellplate member in a composition including a solution of a gold precursor and a reducing agent for manufacturing a substrate for spectroscopic analysis. The formation of the polycrystalline structure in the step ii) indicates growth of gold nanostructure on the surface of the well of the wellplate member.

The polycrystalline structure formed in the step ii) may be consisted of a cluster formed with a plurality of gold nanostructures and include a plurality of pores inside. Although not limited thereto, a plurality of gold nanostructures or a cluster formed with a plurality of gold nanostructures may be in a shape of being interconnected and including pores inside. Although not limited thereto, the plurality of gold nanostructures or the cluster formed with a plurality of gold nanostructures may be interconnected in a branch structure.

Although not limited thereto, the polycrystalline structure may grow through a solution process, be interconnected in a branch structure, and have an average particle size of 0.1 to 100µm. Although not limited thereto, the average particle size of the polycrystalline structure within said range may be suitable for improvement of signal intensity and signal uniformity.

As described above, the plurality of gold nanostructures may be interconnected to form a cluster, and the polycrystalline structure may be consisted of a cluster formed of the plurality of gold nanostructures. In addition, the polycrystalline structure may be formed of a plurality of interconnected clusters and have a plurality of grain boundaries.

The plasmonic wellplate substrate for spectroscopic analysis of the present disclosure including the polycrystalline structure formed as described above is in a shape that gold nanostructures are not detached from one another but connected to form a cluster including pores distributed inside. Therefore, nanogap and hotspot may be significantly increased than when gold nanostructures are formed to be detached from one another. Accordingly, a plasmonic wellplate substrate for spectroscopic analysis according to the present disclosure may show superior SERS signal enhancement effects and signal uniformity about the target materials.

Although not limited thereto, the pores included in the polycrystalline structure may have a porous structure among a plurality of gold nanostructures that may be disorderly, but uniform in overall or a porous structure among clusters formed of a plurality of gold nanostructures that may be disorderly, but uniform in overall. Accordingly, the plasmonic wellplate substrate for spectroscopic analysis of the present disclosure may improve SERS signal enhancement effects and uniformity about a target material.

By having the ratio between a gold precursor and a reducing agent as 1:1 to 1:10 in the step ii), controlling a shape to control a shape of the polycrystalline structure may be included. By controlling an optimal ratio of a reducing agent depending on a type of a reducing agent, shapes of polycrystalline structures formed on the plasmonic wellplate substrate for spectroscopic analysis may be easily controlled. In addition, by controlling time for soaking the wellplate member in a composition for manufacturing a substrate for spectroscopic analysis, shapes of polycrystalline structures formed on a substrate for spectroscopic analysis may be easily controlled. The manufacturing method of a substrate for spectroscopic analysis of the present disclosure may improve signal enhancement and signal uniformity at the same time through a simple process of soaking once or twice.

Although not limited thereto, after the step ii), forming a gold nanoparticle layer on the surface of the polycrystalline structure by attaching gold nanoparticles on the wellplate member with the polycrystalline structure formed may be further included.

By using gold nanoparticles prepared by being separately manufactured as above, a gold nanoparticle layer may be formed by attaching gold nanoparticles on surface of a polycrystalline structure formed in a well of wellplate members. Although not limited thereto, the gold nanoparticles may be prepared through various known manufacturing methods of gold nanoparticles. Although not limited thereto, attachment of the gold nanoparticles in forming the gold nanoparticle layer may be done by known conventional techniques. For example, gold nanoparticles may be attached through physical adsorption, or gold nanoparticles may be attached to fix gold nanoparticles on the surface of the polycrystalline structure after surface modification by using a chemical linker. Through the described configuration, a plasmonic wellplate substrate for spectroscopic analysis may improve SERS signal enhancement effects and uniformity about a target material.

Although not limited thereto, after forming a gold nanoparticle layer on the surface of the polycrystalline structure, forming a gold nanolayer by additional growth of gold nanoparticles on the gold nanoparticle layer by soaking the wellplate member in a composition including a solution of a gold precursor and a reducing agent for manufacturing a substrate for spectroscopic analysis may be further included. Although not limited thereto, the gold nanolayer may be formed in a shape of covering or laminating the polycrystalline structure formed with a gold nanoparticle layer.

Although not limited thereto, the composition for manufacturing a substrate for spectroscopic analysis including a solution of a gold precursor and a reducing agent in forming a gold nanolayer may be the same as or different from the composition of the step ii). Through the configuration described above, the plasmonic wellplate substrate for spectroscopic analysis of the present disclosure may improve SERS signal enhancement effects and uniformity about a target material.

Forming a gold nanolayer by soaking a wellplate member with the formed polycrystalline structure in a composition for manufacturing a substrate for spectroscopic analysis including a solution of a gold precursor and a reducing agent to additionally grow gold nanoparticles on the surface of the polycrystalline structure after the step ii) may be further included. Although not limited thereto, the gold nanolayer may be in a shape of covering or laminating the polycrystalline structure. Through the configuration described above, the plasmonic wellplate substrate for spectroscopic analysis of the present disclosure may improve SERS signal enhancement effects and signal uniformity about a target material.

Although not limited thereto, forming a gold nanoparticle layer on the surface of the polycrystalline structure by attaching gold nanoparticles on the wellplate member with the formed polycrystalline structure after forming the gold nanolayer additionally grown on the surface of the polycrystalline structure may be further included. Through the configuration described above, the plasmonic wellplate substrate for spectroscopic analysis of the present disclosure may improve SERS signal enhancement and signal uniformity about a target material.

Although not limited thereto, a gold nanolayer additionally grown with a gold precursor or a gold nanoparticle layer formed by attaching gold nanoparticles may have thickness of 5 to 100 nm, which may be suitable for improvement of signal enhancement effects and signal uniformity by additional growth, 10 to 95 nm, 15 to 90 nm, 20 to 85 nm, 20 to 80 nm, 20 to 75 nm, 20 to 70 nm, 20 to 65 nm, 20 to 60 nm, 20 to 55 nm, 20 to 50 nm, 20 to 45 nm, or 25 to 40 nm.

Although not limited thereto, the manufacturing method of a plasmonic wellplate substrate for spectroscopic analysis of the present disclosure may further include modifying surface of the polycrystalline structure before forming the gold nanoparticle layer. Modifying surface is a step through which gold nanoparticles can be effectively attached to polycrystalline structure surface upon formation of a gold nanoparticle layer. Although not limited thereto, a chemical linker may be used for the surface modification for fixing of gold nanoparticles. A substance containing a thiol group may be used as the chemical linker.

The composition for manufacturing a substrate for spectroscopic analysis of the present disclosure includes a gold precursor and a reducing agent.

Although not limited thereto, the gold precursor may be selected from a group consisted of HAuCl₄, AuCl, AuCl₂, AuCl₃, Na₂Au₂Cl₈, and NaAuCl₂. However, at least one species of HAuCl₄ and NaAuCl₂ may be more suitable.

Although not limited thereto, the reducing agent may be at least one species of Ascorbic acid, FeSO₄, hydroxyquinone, hydroxylamine, hydroxylamine-O-sulfonic acid, and O-methylhydroxylamine hydrochloride. Although not limited thereto, it may be suitable for the manufacturing of the plasmonic wellplate substrate for spectroscopic analysis with superior signal enhancement effects and signal uniformity that the reducing agent may be at least one species of hydroxylamine, hydroxylamine-O-sulfonic acid, and O-methylhydroxylamine hydrochloride.

Although not limited thereto, the ratio of the gold precursor:reducing agent may be 1:1 to 1:10, 1:2 to 1:10, which may be suitable for the manufacturing of the plasmonic wellplate substrate for spectroscopic analysis with superior signal enhancement effects and signal uniformity, or 1:5 to 1:10, which may be more suitable.

### Example

### Example 1. Manufacturing of Plasmonic Wellplate Substrate for Spectroscopic Analysis Including Polycrystalline Structure

A wellplate member including at least one well was prepared as a base member. A composition for manufacturing a substrate for spectroscopic analysis was mixed and prepared with a ratio of gold precursor solution:reducing agent solution as 1:0.5, 1:1, 1:2, 1:5, or 1:10. Distilled water, ethanol or methanol was used for preparation of the composition as preparation solvent. However, ethanol was used since use of ethanol may be more suitable for uniform formation of polycrystalline structures. The composition was soaked inside each well of a wellplate for 1 minute to 24 hours so that a cluster formed of a plurality of gold nanostructures was formed on the wellplate member and a polycrystalline structure including a plurality of pores inside was formed.

HAuCl₄ was used as a gold precursor solution of a composition for manufacturing the substrate for spectroscopic analysis. Hydroxylamine, hydroxylamine-O-sulfonic acid or O-methylhydroxylamine hydrochloride was used as a reducing agent. After complete formation of a polycrystalline structure, remaining precursor and reducing agent were removed by washing twice with ethanol and more than 3 times with water. Thereafter, manufacturing of a plasmonic wellplate substrate for spectroscopic analysis was completed by drying at a room temperature for at least one hour.

### Example 2. Manufacturing of Plasmonic Wellplate Substrate for Spectroscopic Analysis Including Polycrystalline Structure with Gold Nanoparticle Layer Formed

Surface modification of surface of a polycrystalline structure was done by using a material including a thiol group as a chemical linker on surface of a plasmonic wellplate substrate for spectroscopic analysis with a polycrystalline structure formed inside a well prepared in Example 1. Herein, cysteine was used as a material including a thiol group at a concentration range of 1 to 1000 µM. Thereafter, gold nanoparticles were attached by adding gold nanoparticle solution, which had been separately prepared in advance, inside each well so that a gold nanoparticle layer was formed with thickness of 25 to 40 nm on surface of the polycrystalline structure. The material with a thiol group was optionally used, and even in absence of the material, gold nanoparticles was attached through physical adsorption. The reaction proceeded until a gold nanoparticle solution was completely dried at a temperature of 40°C. After complete formation of a gold nanoparticle layer, manufacturing of the plasmonic wellplate substrate for spectroscopic analysis was completed by washing twice or more with water.

### Example 3. Manufacturing of Plasmonic Wellplate Substrate for Spectroscopic Analysis Including Polycrystalline Structure Formed with Gold Nanolayer Formed on Gold Nanoparticle Layer

In the plasmonic wellplate substrate for spectroscopic analysis with a gold nanoparticle layer formed on the surface of the polycrystalline structure that is prepared in Example 2, the composition for manufacturing a substrate for spectroscopic analysis of Example 1 was soaked inside each well of the wellplate for 1 minute to 24 hours to form a gold nanolayer by additional growth of gold nanoparticles on the gold nanoparticle layer. After complete formation of the additionally grown gold nanolayer, supernatant was removed, and the wellplate substrate was completely dried. Then, the manufacturing of a plasmonic wellplate substrate for spectroscopic analysis was completed by drying at room temperature for at least one hour.

### Example 4. Manufacturing of Plasmonic Wellplate Substrate for Spectroscopic Analysis Having Polycrystalline Structure with Gold Nanolayer Formed

In the plasmonic wellplate substrate for spectroscopic analysis with a polycrystalline structure formed inside a well as manufactured in Example 1, the composition for manufacturing a substrate for spectroscopic analysis in Example 1 was soaked inside each well for 30 seconds to 24 hours to form a gold nanolayer by additional growth on the surface of the polycrystalline structure.

After complete formation of the additionally grown gold nanolayer, remaining precursor and reducing agent were removed by washing twice or more with water or ethanol. Thereafter, manufacturing of a plasmonic wellplate substrate for spectroscopic analysis was completed by drying at room temperature for one or more hours.

### Example 5. Manufacturing of Plasmonic Wellplate for Spectroscopic Analysis Having Polycrystalline Structure with Gold Nanoparticle Layer Formed on Gold Nanolayer

A gold nanoparticle layer was formed with thickness of 25 to 40 nm by attaching gold nanoparticle on a gold nanolayer by attaching separately pre-manufactured gold nanoparticles inside each well of the plasmonic wellplate substrate for spectroscopic analysis with a gold nanolayer formed by additional growth on the surface of the polycrystalline structure as prepared in Example 4.

After complete formation of a gold nanoparticle layer by attaching gold nanoparticles, manufacturing of a plasmonic wellplate substrate for spectroscopic analysis was completed by drying at room temperature.

### Experimental Example

### 1. Comparison of Signal Intensity and Size Distribution per Shape of Polycrystalline Structure

(a) in FIG. 7 is a graph illustrating SERS signal intensity per nanostructure of a polycrystalline structure of the plasmonic wellplate substrate for spectroscopic analysis manufactured according to one embodiment of the present disclosure.

(b) in FIG. 7 is a graph illustrating SERS signal intensity at a main peak per nanostructure of a polycrystalline structure of the plasmonic wellplate substrate for spectroscopic analysis manufactured according to one embodiment of the present disclosure.

Referring to FIG. 7, it could be confirmed that a peak was formed due to formation of a polycrystalline structure on the plasmonic wellplate substrate for spectroscopic analysis of the present disclosure. Specifically, it could be confirmed that SERS signal intensity of the plasmonic wellplate substrate for spectroscopic analysis substrate having a polycrystalline structure with formation of a gold nanoparticle layer (AuNP 25nm/Short Tree and AuNP25nm/Long Tree), a polycrystalline structure with formation of a gold nanolayer (Laminate/AuNP40nm/Thick Sponge), or a polycrystalline structure with formation of a gold nanoparticle layer or with formation of a gold nanoparticle layer on a gold nanolayer had a significant and high main peak.

Meanwhile, when SERS signal intensity was measured for a gold-coated microplate of a commercialized product of Nirmidas company, as a comparative example, there was no significant peak appeared.

FIG. 10 is a TEM image of a nanostructure of a polycrystalline structure with formation of a gold nanolayer, which is formed by additional growth with a gold precursor after formation of a gold nanoparticle layer by attaching gold nanoparticles on a polycrystalline structure, in a thick sponge shape, of the plasmonic wellplate substrate for spectroscopic analysis manufactured according to one embodiment of the present disclosure.

FIG. 11 are graphs and images illustrating size distributions of nanostructures of a polycrystalline structure, in a thick sponge shape, of the plasmonic wellplate substrate for spectroscopic analysis manufactured according to one embodiment of the present disclosure, nanostructures of a polycrystalline structure with formation of a gold nanoparticle layer by attaching gold nanoparticles on the polycrystalline structure in a thick sponge shape, and nanostructures of a polycrystalline structure with formation of a gold nanolayer by additional growth with gold precursor on the gold nanoparticle layer.

Referring to FIGS. 10 and 11, a shape of a polycrystalline structure formed in a cluster with a plurality of gold nanostructures with formation of a gold nanoparticle layer AuNP by attachment of gold nanoparticles on the surface of the polycrystalline structure AuNS in a thick-sponge shape and with formation of a gold nanolayer by additional growth on a gold nanoparticle layer could be confirmed. In addition, it could be confirmed that the size distribution of the polycrystalline structure moved towards a higher value as a gold nanoparticle layer is formed and a gold nanolayer was formed.

### 2. Comparison of Signal Intensity per Reducing Agent Type and Ratio between Gold Precursor and Reducing Agent

FIG. 8 are graphs illustrating SERS signal intensities measured at 633 nm per reducing agent type and ratio between gold precursor and reducing agent when a polycrystalline structure of the plasmonic wellplate substrate for spectroscopic analysis manufactured according to one embodiment of the present disclosure is formed.

FIG. 9 are graphs illustrating SERS signal intensities measured at 785 nm per reducing agent type and ratio between gold precursor and reducing agent when a polycrystalline structure of the plasmonic wellplate substrate for spectroscopic analysis manufactured according to one embodiment of the present disclosure is formed.

SERS signal intensities were measured per reducing agent type and ratio between gold precursor and reducing agent of the plasmonic wellplate substrate for spectroscopic analysis, which did not involve formation of a gold nanolayer or a gold nanoparticle layer, with a polycrystalline structure formed by direct growth of a gold nanostructure on a well plate member. The SERS signal intensities were measured at 633nm and 785 nm, and Malachite Green was used as a target molecule.

Referring to FIGS. 8 and 9, it was confirmed that hydroxylamine (HA), hydroxylamine-O-sulfonic acid (HOS), and O-methylhydroxylamine hydrochloride (OMH) were suitable as a reducing agent for manufacturing of the plasmonic wellplate substrate for spectroscopic analysis of the present disclosure. In addition, as a ratio of gold precursor:reducing agent increases from 1:0.5 to 1:10 for each reducing agent, the SERS signal intensity increased more. A ratio of 1:10, which demonstrated the highest intensity of the signal, may be set as an optimum ratio, and a range of a ratio between 1:0.5 to 1:10 may be set as a range of optimum ratios.

### 3. Signal Detection and Comparison of Dry Specimen and Aqueous Specimen

(a) in FIG. 12 is a graph illustrating a SERS signal intensity per nanostructure of a polycrystalline structure measured at 633 nm for a dry specimen by using the plasmonic wellplate substrate for spectroscopic analysis manufactured according to one embodiment of the present disclosure.

(b) and (c) in FIG. 12 are graphs illustrating a SERS signal intensity and limit of detection per concentration of a specimen measured at 633 nm for a dry specimen by using the plasmonic wellplate substrate for spectroscopic analysis manufactured according to one embodiment of the present disclosure.

(a) in FIG. 13 is a graph illustrating a SERS signal intensity per nanostructure of a polycrystalline structure measured at 785 nm for a dry specimen by using the plasmonic wellplate substrate for spectroscopic analysis manufactured according to one embodiment of the present disclosure.

(b) and (c) in FIG. 13 are graphs illustrating a SERS signal intensity and limit of detection per concentration of a specimen measured at 785 nm for a dry specimen by using the plasmonic wellplate substrate for spectroscopic analysis manufactured according to one embodiment of the present disclosure.

(a) in FIG. 14 is a graph illustrating a SERS signal intensity per nanostructure of a polycrystalline structure measured at 785 nm for a liquid specimen by using the plasmonic wellplate substrate for spectroscopic analysis manufactured according to one embodiment of the present disclosure.

(b) and (c) in FIG. 14 are graphs illustrating a SERS signal intensity and limit of detection per concentration of a specimen measured at 785 nm for a liquid specimen by using the plasmonic wellplate substrate for spectroscopic analysis manufactured according to one embodiment of the present disclosure.

(a) in FIG. 15 is a graph illustrating SERS signal uniformity of a liquid specimen in one well of the plasmonic wellplate substrate for spectroscopic analysis manufactured according to one embodiment of the present disclosure. (b) in FIG. 15 is a graph illustrating SERS signal uniformity of liquid specimens among 96 different wells of the plasmonic wellplate substrate for spectroscopic analysis manufactured according to one embodiment of the present disclosure.

Signal detections of the plasmonic wellplate substrate for spectroscopic analysis of the present disclosure for solution specimens and dry specimens, which was dried from the solution, of 4-ATP and Malachite Green as analyzed materials were compared. Signal detections for 4-ATP and signal detections for Malachite Green were performed by obtaining SERS signals with a substrate including a polycrystalline structure with a gold nanoparticle layer formed by attachment of gold nanoparticles on a polycrystalline structure that is formed by direct growth of a gold nanostructure on a wellplate member and with a gold nanolayer formed by additional growth on the gold nanoparticle layer.

Referring to FIGS. 12 to 14, the signal intensities were shown the highest for both dry specimens and solution specimens when a polycrystalline structure was formed with a gold nanoparticle layer formed by attachment of gold nanoparticles on a polycrystalline structure that was formed by direct growth of a gold nanostructure on a wellplate member and with a gold nanolayer formed by additional growth on the gold nanoparticle layer.

Meanwhile, signal intensities may be shown higher for solution specimens than for dry specimens. Referring to FIG. 15, it can be demonstrated that signal uniformity for solution specimens is also superior. Therefore, the plasmonic wellplate substrate for spectroscopic analysis of the present disclosure may be effective for detection of solution specimens, and reliability of the measurement results may also be secured.

### 4. Evaluation of Detection and Sensibility of Metabolites in Solution

FIG. 16 is a graph illustrating SERS signal intensities of 6 types of metabolites (Uracil, Guanine, Xanthine, Purine, Hypoxanthine and Adenine) measured for aqueous specimens by using the plasmonic wellplate substrate for spectroscopic analysis manufactured according to one embodiment of the present disclosure.

(a) to (d) in FIG. 17 are graphs illustrating SERS signal intensities and limits of detection of 4 types of metabolites (Adenine, Xanthine, Hypoxanthine and Purine) measured for aqueous specimens by using the plasmonic wellplate substrate for spectroscopic analysis manufactured according to one embodiment of the present disclosure.

Said metabolites were provided in 4 types, Xanthine, Purine, Hypoxanthine and Adenine, to the substrate in an aqueous specimen form. A SERS signal was verified by using a substrate having a polycrystalline structure with formation of a gold nanoparticle layer by attaching gold nanoparticles on the polycrystalline structure by direct growth of a gold nanostructure on a well plate member and with formation of a gold nanolayer on a gold nanoparticle layer by additional growth.

Referring to FIG. 16, it could be confirmed that Xanthine, Purine, Hypoxanthine and Adenine among the six types of metabolites could be significantly detected by testing Raman spectroscopic signal intensity by using the plasmonic wellplate substrate for spectroscopic analysis of the present disclosure.

Referring to FIG. 17, it could be confirmed that signal sensitivity of the plasmonic wellplate substrate for spectroscopic analysis of the present disclosure was superior for the 4 types of metabolites, Xanthine, Purine, Hypoxanthine and Adenine, which showed clear Raman spectroscopic signals.

### 5. Signal Detection and Sensitivity Evaluation on Urine Specimen of Patient Suffering from Cancer

FIG. 18 is a graph illustrating a normalized SERS signal intensity of a urine specimen of a cancer patient measured by using the plasmonic wellplate substrate for spectroscopic analysis manufactured according to one embodiment of the present disclosure.

FIG. 19 is a graph illustrating SERS signal intensity of cancer metabolite candidates for urine specimens of cancer patients measured by using the plasmonic wellplate substrate for spectroscopic analysis manufactured according to one embodiment of the present disclosure.

SERS signal was confirmed for liquid specimens by using a substrate having a gold nanoparticle layer formed by attachment of gold nanoparticles on a polycrystalline structure with a gold nanostructure grown on a wellplate member by direct growth and having a polycrystalline structure with a gold nanolayer formed on a gold nanoparticle layer by additional growth.

Referring to FIGS. 18 and 19, it can be demonstrated that using the plasmonic wellplate substrate for spectroscopic analysis of the present disclosure may be suitable for use in diagnosis of cancer through liquid specimens, such as patient urine that may include cancer metabolites.

### 6. Raman Shift Analysis of Cancer Patient Specimens Compared to Normal Person per Cancer Type

(a) to (d) in FIG. 20 are graphs illustrating positions of Raman Shifts where difference from a normal person is shown in a reliability range of 95% or more per cancer type, the Raman Shifts measured by using the plasmonic wellplate substrate for spectroscopic analysis manufactured according to one embodiment of the present disclosure. (e) in FIG. 20 is a graph illustrating relative size comparison per a Raman Shift position for each cancer type, the Raman Shift measured by using the plasmonic wellplate substrate for spectroscopic analysis manufactured according to one embodiment of the present disclosure.

SERS signals of liquid specimens were confirmed by using a substrate having a gold nanoparticle layer formed by attachment of gold nanoparticles on a polycrystalline structure with a gold nanostructure formed by direct growth on a wellplate member and having a polycrystalline structure with a gold nanolayer formed on a gold nanoparticle layer by additional growth.

Referring to (a) to (d) in FIG. 20, after having measuring Raman spectra by using urine specimens of cancer patients suffering from Colorectal cancer, Lung cancer, Prostate cancer or Pancreatic Cancer, and urine specimens of a normal person (FIG. 18), sections where Raman shift positions were different by reliability of more than 95% from a normal person per type of cancer were collected. The method of selection was proceeded by performing a t-test on the entire Raman spectra, however positions that do not correspond to peaks are excluded from the selection.

Referring to (e) in FIG. 20, positions where signal intensities of two or more cancer types among the 4 cancer types were either higher or lower than those of a normal person were selected and illustrated in a polygonal shape so that the patterns by Raman shift positions per cancer type were compared. Accordingly, it was verified that the distinguishment between a normal person and a cancer patient is possible.

### 7. Analysis of Signal Distinguishment Accuracy for Cancer Patient Specimens in Comparison to Normal Person per Cancer Type

(a) to (d) in FIG. 21 are confusion matrix result graphs for illustrating accuracy of distinguishing from a normal person per cancer type for urine specimens of cancer patients measured by using the plasmonic wellplate substrate for spectroscopic analysis manufactured according to one embodiment of the present disclosure. (e) in FIG. 21 is a Receiver Operating Characteristic (ROC) curve graph illustrating distinguishment accuracy from a normal person per cancer type for urine specimens of cancer patients measured by using the plasmonic wellplate substrate for spectroscopic analysis manufactured according to one embodiment of the present disclosure.

SERS signals for liquid specimens were confirmed by using a substrate having a gold nanoparticle layer formed by attaching gold nanoparticles on a polycrystalline structure with a gold nanostructure formed by direct growth on a wellplate member and having a polycrystalline structure with a gold nanolayer formed on a gold nanoparticle layer by additional growth.

After having measuring Raman spectra by using urine specimens of cancer patients suffering from Colorectal cancer, Lung cancer, Prostate cancer or Pancreatic cancer, and a urine specimen of a normal person (FIG. 18), distinguishment accuracy from a normal person per cancer type was confirmed by using a logistic regression method, one of machine learning techniques. The number of cancer patients and the number of normal people for model training were set as 70% of the entire population per cancer type and the number of cancer patients and the number of normal people for tests were set as 30% of the entire population per cancer type. The above ratio was set as a regular train and test ratio. The ratio of training set and testing set was set within 1 to 99%, respectively. Furthermore, a validation set was additionally set within 1 to 99% for validation of the model derived by the train set. However, the summation of train set, test set and validation set must satisfy 100%.

As methods of distinguishing Raman spectra, known machine training methods, such as decision tree classification method, random forest method, support vector machine, K-nearest neighbor, Naive bayes algorithm, and Partial Least Squares-Discriminant Analysis (PLS-DA), may be commonly used. However, for the experimental examples, a trained set was tested by a logistic regression method per each cancer type to demonstrate a confusion matrix ((a) to (d) in FIG. 21) and receiver operating characteristic ((e) in FIG. 21) per cancer type.

As specific parts of the present disclosure are described in details above, it would be clear to the person ordinarily skilled in the art that such detailed description is merely one embodiment and the scope of the present disclosure is not limited thereof. Accordingly, it should be noted that the substantial scope of the present disclosure is defined by the attached claims and their equivalents.

## Claims

1. A plasmonic wellplate substrate for spectroscopic analysis comprising:
a wellplate member having at least one well; and
a polycrystalline structure formed inside the well,
wherein the polycrystalline structure comprises a cluster formed of a plurality of gold nanostructures and comprises multiple pores inside.

2. The plasmonic wellplate substrate for spectroscopic analysis of claim 1, wherein the gold nanostructure or the cluster formed of gold nanostructures is connected to one another.

3. The plasmonic wellplate substrate for spectroscopic analysis of claim 1, wherein the polycrystalline structure has at least one shape of a nano-sponge shape, a nano-tree shape, a nano-branch shape and a nano-coral shape.

4. The plasmonic wellplate substrate for spectroscopic analysis of claim 1, wherein the polycrystalline structure further comprises a gold nanoparticle layer on its surface.

5. The plasmonic wellplate substrate for spectroscopic analysis of claim 4, wherein the polycrystalline structure further comprises a gold nanolayer additionally grown with a gold precursor on the gold nanoparticle layer.

6. The plasmonic wellplate substrate for spectroscopic analysis of claim 1, wherein the polycrystalline structure further comprises a gold nanolayer additionally grown with a gold precursor on its surface.

7. The plasmonic wellplate substrate for spectroscopic analysis of claim 6, wherein the polycrystalline structure further comprises a gold nanoparticle layer on the gold nanolayer.

8. The plasmonic wellplate substrate for spectroscopic analysis of any one of claims 4 to 7, wherein an average thickness of the gold nanoparticle layer or the gold nanolayer is 5 to 100 nm.

9. The plasmonic wellplate substrate of claim 1, wherein the plasmonic wellplate substrate for spectroscopic analysis is for Surface Enhanced Raman Spectroscopy (SERS), Plasmon-Enhanced Fluorescence (PEF) or Fluorescence analysis.

10. A manufacturing method of a plasmonic wellplate for spectroscopic analysis comprising:
i) Preparing a wellplate member having least one well; and
ii) Forming a polycrystalline structure inside the well by soaking the wellplate member in a composition for manufacturing a substrate for spectroscopic analysis, the composition comprising a solution of a gold precursor and a reducing agent.
wherein the polycrystalline structure formed in the step ii) comprises a cluster formed of a plurality of gold nanostructures and comprises a plurality of pores inside, and
wherein a ratio between the gold precursor and the reducing agent in the step ii) is from 1:1 to 1:10 to control a shape of the polycrystalline structure.

11. The manufacturing method of a plasmonic wellplate for spectroscopic analysis of claim 10, wherein forming a gold nanoparticle layer on the surface of the polycrystalline structure by attaching gold nanoparticles on the wellplate member with the formed polycrystalline structure is further comprised after the step ii).

12. The manufacturing method of a plasmonic wellplate substrate for spectroscopic analysis of claim 11, wherein forming an additionally grown gold nanolayer on the gold nanoparticle layer by soaking the wellplate member in a composition for manufacturing a substrate for spectroscopic analysis, the composition comprising a solution of a gold precursor and a reducing agent, is further comprised after the step of forming a gold nanoparticle layer on the surface of the polycrystalline.

13. The manufacturing method of a plasmonic wellplate substrate for spectroscopic analysis of claim 10, wherein forming an additionally grown gold nanolayer on the surface of the polycrystalline structure by soaking the wellplate member with the formed polycrystalline structure in a composition for manufacturing a substrate for spectroscopic analysis, the composition comprising a solution of a gold precursor and a reducing agent is further included after the step ii).

14. The manufacturing method of a plasmonic wellplate substrate for spectroscopic analysis of claim 13, wherein forming a gold nanoparticle layer on the surface of the polycrystalline structure by attaching gold nanoparticles on the wellplate member may be further comprised after the step of forming an additionally grown gold nanolayer on the surface of the polycrystalline structure.

15. The manufacturing method of a plasmonic wellplate substrate for spectroscopic analysis of any one of claims 11 or 14, wherein modifying surface of the polycrystalline structure may be further comprised prior to the step of forming the gold nanoparticle layer.

16. The manufacturing method of a plasmonic wellplate substrate for spectroscopic analysis of claim 10, wherein the reducing agent is at least one of ascorbic acid, hydroxylamine, hydroxylamine-O-sulfonic acid, and O-methylhydroxylamine hydrochloride.
